# EUROPEAN PATENT APPLICATION

(11) **EP 3 481 128 A1**
(43) Date of publication of application: **08.05.2019**
(21) Application number: 18164777.7
(22) Date of filing: 28.03.2018
(51) Int. Cl.: H04W 74/08, H04L 5/00, H04W 74/00

(54) **METHOD OF DATA TRANSMISSION AND RECEPTION IN RANDOM ACCESS PROCEDURE**

(30) Priority: 03.11.2017 US 201715802486
(71) Applicant: MediaTek Inc., Hsin-Chu 300 (TW)
(72) Inventor: TSAI, Chiou-Wei, 653 Yunlin County (TW); GAU, Guo-Hau, 302 Hsinchu County (TW)
(74) Representative: Haseltine Lake LLP

(57) **Abstract**

A method of data transmission in a random access procedure for a UE of a wireless communication system including a network comprises obtaining a resource allocated for data transmission and a resource allocated for preamble transmission with these resources allocated in a frequency division multiplexing (FDM) manner, transmitting a preamble and data in the random access procedure to the network according to the obtained resources, and monitoring a response corresponding to the transmitted preamble and data from the network.

## Description

This application claims the benefit of U.S. Provisional Application No. 62/416, 740, filed on Nov. 3, 2016 and entitled "2-step random access physical channel design".

### Background

Random access channel (RACH) of the long term evolution (LTE) system is used for initial network access and uplink timing synchronization. Unlike the legacy 4-step RACH procedure, a 2-step RACH procedure has been discussed in 3GPP standardization meetings for 5G. Note that, compared with the 4-step RACH procedure in the LTE, the simplified 2-step RACH procedure reduces signaling overhead and transmission latency.

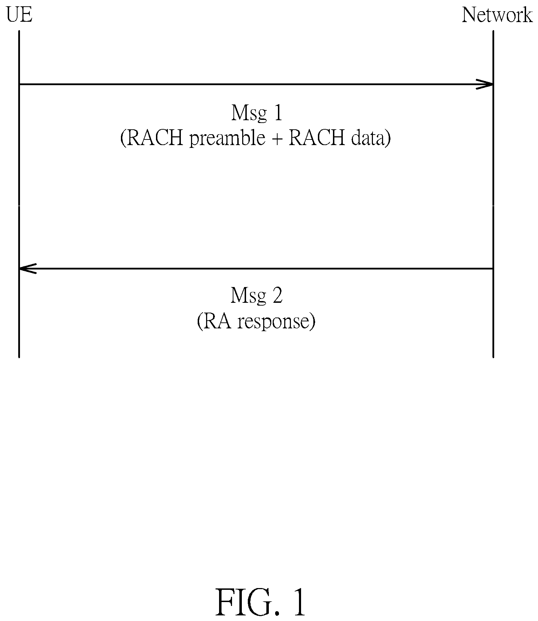

Please refer to FIG. 1, which is a schematic diagram of 2-step RACH procedure according to the prior art. In the first step, the UE transmits preamble along with RACH data to the network (i.e. with the message Msg 1) . In the second step, the UE receives RACH response including detected preamble index, UE identity, timing advance (TA) from the network (i.e. with the message Msg 2). In other words, the 2-step RACH procedure allows the UE to transmit both preamble and data on the RACH, whereas the 4-step RACH procedure allows the UE to transmit only preamble on the RACH. As a result, the 2-step RACH procedure is beneficial to small-packet uplink transmissions.

However, there is no specification for physical channel design for the 2-step RACH procedure. In detail, resource allocation and numerology/format for data transmission/reception on the RACH is not considered in the LTE specification. Thus, the network cannot extract/decode the data received from the UE in the 2-step RACH procedure.

### Summary

It is therefore an objective to provide a method of data transmission and reception in a random access procedure in order to solve the abovementioned problems.

The present invention discloses a method of data transmission in a random access procedure for a UE of a wireless communication system including a network. The method comprises obtaining a resource allocated for data transmission and a resource allocated for preamble transmission with these resources allocated in a frequency division multiplexing FDM manner, transmitting a preamble and data in the random access procedure to the network according to the obtained resources, and monitoring a response corresponding to the transmitted preamble and data from the network.

The present invention discloses a method of data transmission in a random access procedure for a user equipment (UE) of a wireless communication system including a network. The method comprises transmitting the preamble and data in the random access procedure to the network according to an association among any combination of preambles, multiple access (MA) resources for data transmission and demodulation reference signals (DMRSs) for uplink channel estimation, and monitoring a response corresponding to the transmitted preamble and data from the network.

The present invention discloses a method of data reception in a random access procedure for a network of a wireless communication system including a UE. The method comprises receiving a preamble and data in the random access procedure on resources allocated in a frequency division multiplexing (FDM) manner, from the UE, and transmitting a response corresponding to the received preamble, to the UE.

The present invention discloses a method of data reception in a random access procedure for a network of a wireless communication system including a UE. The method comprises receiving a preamble and data in the random access procedure, from the UE, performing a channel estimation for demodulation of the received data, decoding the received data according to a channel estimation result and an association among any combination of preambles, multiple access (MA) resources for data transmission, and demodulation reference signals (DMRSs) for uplink channel estimation, and transmitting a response corresponding to the received preamble, to the UE.

The present invention further discloses that the resource allocated for data transmission in a random access procedure is predefined in the UE and/or configured by the network via broadcasted system information and/or UE-specific signaling.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a 2-step RACH procedure according to the prior art.
FIG. 2 is a schematic diagram of an exemplary communication device according to the present disclosure.
FIGs. 3-4 are a flowcharts of an exemplary process according to the present disclosure.
FIGs. 5A-5D are schematic diagrams of association between preambles and MA resources according to the present disclosure.
FIGs. 6A-6D are schematic diagrams of association between preambles and DMRSs according to the present disclosure.
FIGs. 7A-7D are schematic diagrams of association between DMRSs and MA resources according to the present disclosure.
FIG. 8 is a schematic diagrams of association among preambles, DMRSs and MA resources according to the present disclosure.
FIGs. 9A-9F are schematic diagrams of allocation types for preamble and RACH data transmission according to the present disclosure.
FIGs. 10A-10H are schematic diagrams of allocation types for preamble and RACH data transmission according to the present disclosure.

### Detailed Description

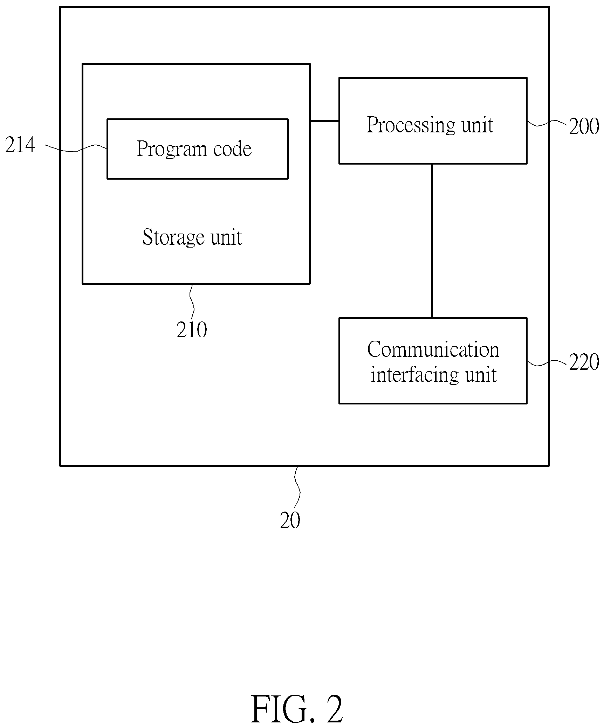

FIG. 2 illustrates a schematic diagram of an exemplary communication device 20. The communication device 20 can be a network (e.g. a base station) or a user equipment (UE), such as wearable devices, IoT devices, mobile phones, appliances, machine type devices, etc. compatible with LTE or 5G new radio (NR) specification. The communication device 20 may include a processing unit 200 such as a processor, Application Specific Integrated Circuit (ASIC), etc., a storage unit 210 and a communication interfacing unit 220. The storage unit 210 may be any data storage device that can store program code 214 corresponding to a process, for access by the processing unit 200. The processing unit 200 may be coupled to the storage unit 210, for processing the program code 214 to execute the process. Examples of the storage unit 210 include but are not limited to a read-only memory (ROM), flash memory, random-access memory (RAM), CD-ROMs, magnetic tape, hard disk, and optical data storage device. The communication interfacing unit 220 may be a radio transceiver and can exchange wireless signals according to processing results of the processing unit 200.

Referring back to FIG. 1, the UE transmits not only the preamble but also the data by the message Msg 1 of 2-step RACH procedure. The data might contain information about the UE identity and RRC connection request if required. In addition, if the message Msg 1 is received by the network, the network sends the message Msg 2 including the detected preamble index, UE identity, timing advance (TA) to the corresponding UE.

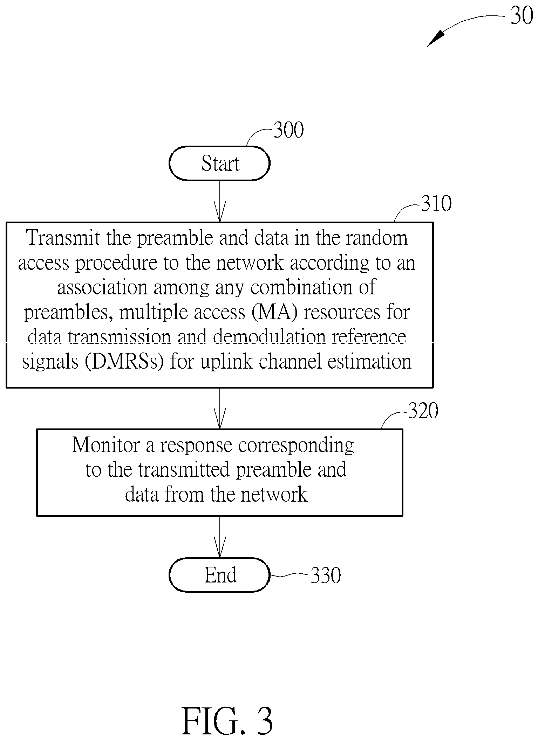

Please refer to FIG. 3, which is a flowchart of a process 30 according to an example of the present disclosure. The process 30 may be utilized in the UE of FIG. 2 for data transmission in the random access procedure. The process 30 may be compiled into the program code 214 to be stored in the storage unit 310 for being processed by the processing unit 200, and may include the following steps:
Step 300: Start.
Step 310: Transmit the preamble and data in the random access procedure to the network according to an association among any combination of preambles, multiple access (MA) resources for data transmission and demodulation reference signals (DMRSs) for uplink channel estimation.
Step 320: Monitor a response corresponding to the transmitted preamble and data from the network.
Step 330: End.

According to the process 30, the UE decides the preamble, the DMRS if employed, and MA resource by one of the following methods:
1. The UE randomly selects from preamble set for contention-based random access, and selects a MA resource from MA resource pool based on the selected preamble;
2. The UE is configured with the dedicated preamble by the network. For example, a reserved preamble for contention-free random access. The UE selects a MA resource from MA resource pool based on the configured preamble. If there are more than one choice, then the UE randomly selects one. In addition, the UE selects a DMRS based on the selected preamble and/or selected MA resource.

In addition, the UE obtains the following information with broadcast system information and/or UE-specific signaling from the network or with pre-defined configurations in the UE. The information includes available resources (i.e. physical time-frequency resources) allocated for preambles and data, and association among any combination of preambles, MA resources and DMRSs if DMRS is employed.

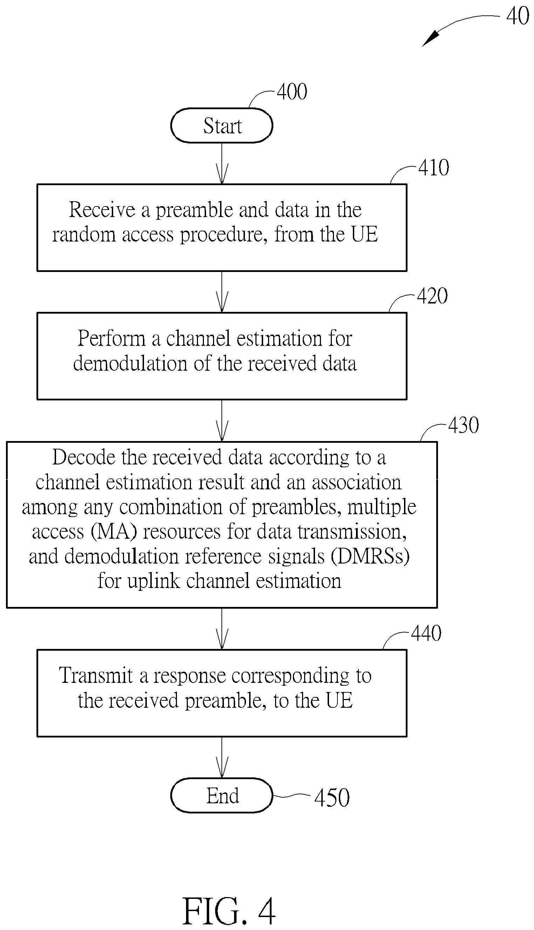

Please refer to FIG. 4, which is a flowchart of a process 40 according to an example of the present disclosure. The process 40 may be utilized in the network of FIG. 2 for data reception in the random access procedure. The process 40 may be compiled into the program code 214 to be stored in the storage unit 310 for being processed by the processing unit 200, and may include the following steps:
Step 400: Start.
Step 410: Receive a preamble and data in the random access procedure, from the UE.
Step 420: Perform a channel estimation for demodulation of the received data.
Step 430: Decode the received data according to a channel estimation result and an association among any combination of preambles, multiple access (MA) resources for data transmission, and demodulation reference signals (DMRSs) for uplink channel estimation.
Step 440: Transmit a response corresponding to the received preamble, to the UE.
Step 450: End.

According to process 40, the network processes (e.g. decoding/demodulating) the data in the random access procedure with the MA resource and the DMRS if DMRS is employed, wherein the DMRS and MA resource are directly or indirectly associated with the received preamble. Thus, the network is able to decode/demodulate the data in the random access procedure without blindly detecting all available MA resources for RACH data multiplexing and all available DMRS for uplink channel estimation, so that detection complexity is reduced.

In an embodiment, an association table is established on both of the UE and the network, wherein the association table includes mapping information among preambles, DMRSs and MA resources. For example, the preamble is mapped to the MA resource, the preamble is mapped to the DMRS, and/or the DMRS is mapped to the MA resource. In such a manner, the UE and the network know which MA resource (s) /DMRS should be used for data transmission and reception when a preamble is selected/detected.

Note that, while preambles can be multiplexed by ZC-like sequences, data transmitted in the random access procedure (hereafter called RACH data) is multiplexed by means of an uplink multiple access (ULMA) scheme. RACH data from different UEs are multiplexed by an uplink multiple access scheme onto same or different time-frequency resources depending on the selected ULMA scheme. An ULMA scheme can be a non-orthogonal multiple access (NOMA) or an orthogonal multiple access (OMA) scheme. By the NOMA scheme, RACH data from different UEs can be multiplexed onto the same time-frequency resource. On the other hand, by the OMA scheme, RACH data from different UEs can be multiplexed onto same or different time-frequency resources depending on which MA resource have been chosen. With abovementioned ULMA scheme, the MA resource of the present invention is comprised of a MA physical resource and a MA signature wherein a MA physical resource is comprised of a physical time-frequency block and a MA signature includes at least one of the following: codeword, sequence, interleaving and/or mapping pattern, spatial-dimension, power-dimension, time-frequency resource, etc. For example, the Group Orthogonal Coded Access (GOCA) is a sequence-based uplink NOMA scheme which multiplexes different UEs in the sequence domain. Its corresponding MA signatures are hence the defined sequences. Another example is the Repetition Division Multiple Access (RDMA) uplink NOMA scheme which applies different cyclic repetition patterns for interleaving. Therefore, MA signatures for RDMA can be defined interleaving and/or mapping patterns. Yet another example is the Orthogonal Multiplexing Access (OMA) scheme. When its MA signature is defined by (smaller) time-frequency resource, it implies data from different users are multiplexed onto different time-frequency resources within the given (larger) MA physical block. In this case, RACH data from different UEs are multiplexed onto different time-frequency resources (within the given MA physical block). On the other hand, when the MA signature is defined in the power-dimension for the OMA scheme, then RACH data from different UEs can be multiplexed on the same time-frequency resource block.

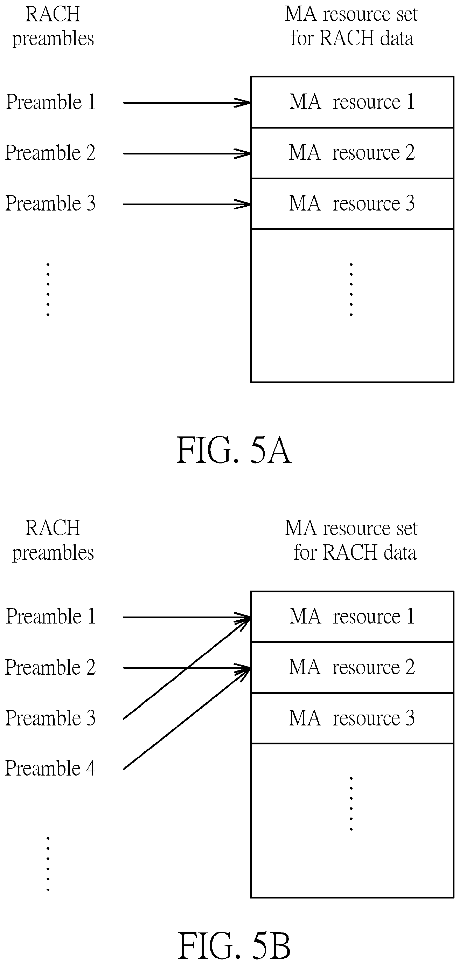

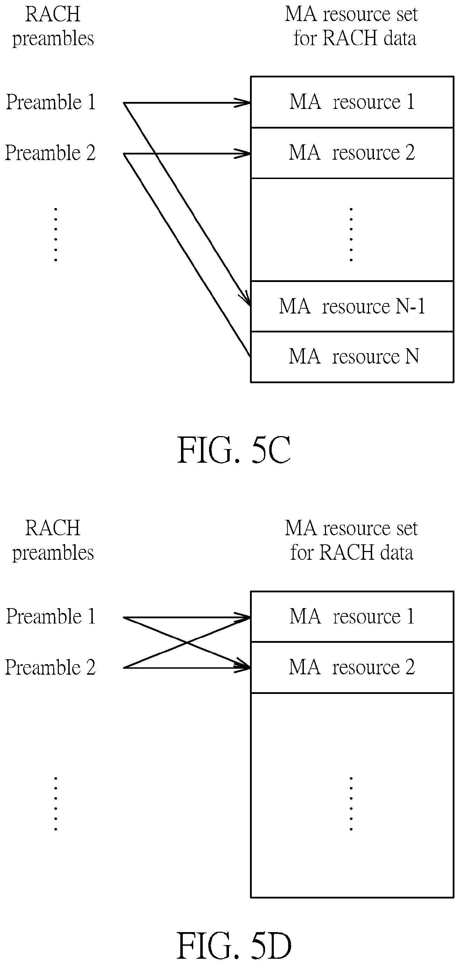

Please refer to FIGs. 5A-5D, which illustrate association between the preambles and MA resources (i.e. MA physical resource and MA signature) . In FIG. 5A, one preamble is mapped to one MA resource. For example, the Preambles 1-3 are mapped to the MA resources 1-3 respectively. Note that, the MA resources 1-N may be represented for different parameters (e.g. MA physical resource, codeword, sequence, and interleaving pattern) of the MA resource set allocated for RACH data transmission. In this so-called one-to-one mapping method, no blind detecting of MA resources is required after a preamble is detected. However, a preamble collision implies a DMRS/MA resource collision which may fail the RACH data decoding. The network cannot detect which UEs have sent PRACH signals using the same preamble. In FIG. 5B, multiple preambles are mapped to one MA resource of the MA resource set allocated for RACH data transmission. For example, the Preambles 1 and 3 are mapped to the MA resource 1. In FIG. 5C, one preamble is mapped to multiple MA resources of the MA resource set allocated for RACH data transmission. For example, the Preamble 1 is mapped to MA resource 1 and N-1. In this so-called one-to-multiple mapping method, if two UEs select the same preamble but different MA resources, their data may be decoded correctly by the network even though there is a preamble collision. Furthermore, because UE identity is carried as RACH data in Msg 1, the network knows which two UEs have sent PRACH signals using the same preamble. The network can therefore send Msg 2 to both UEs and complete the two-step random access procedure. In FIG. 5D, one preamble is mapped to multiple MA resources of the MA resource allocated for RACH data transmission, and one MA resource is mapped to multiple preambles. For example, the Preamble 1 is mapped to MA resources 1 and 2, and the MA resource 1 is mapped to Preambles 1 and 2 as well.

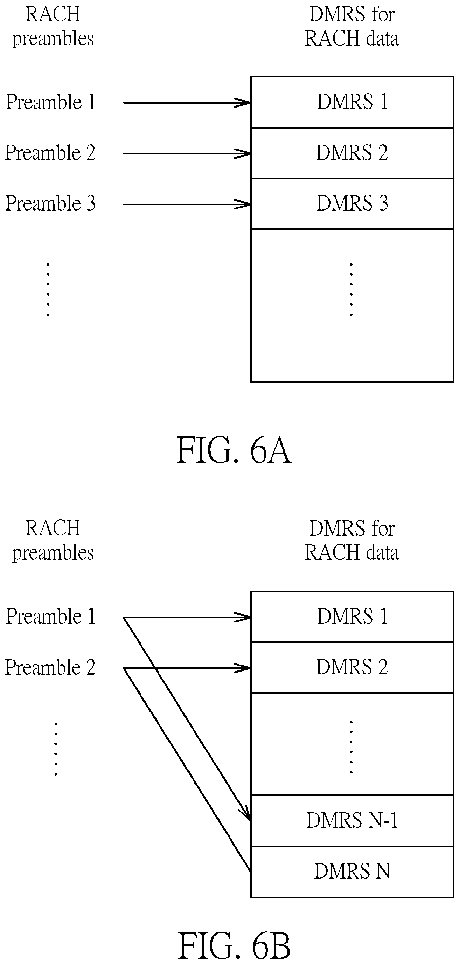

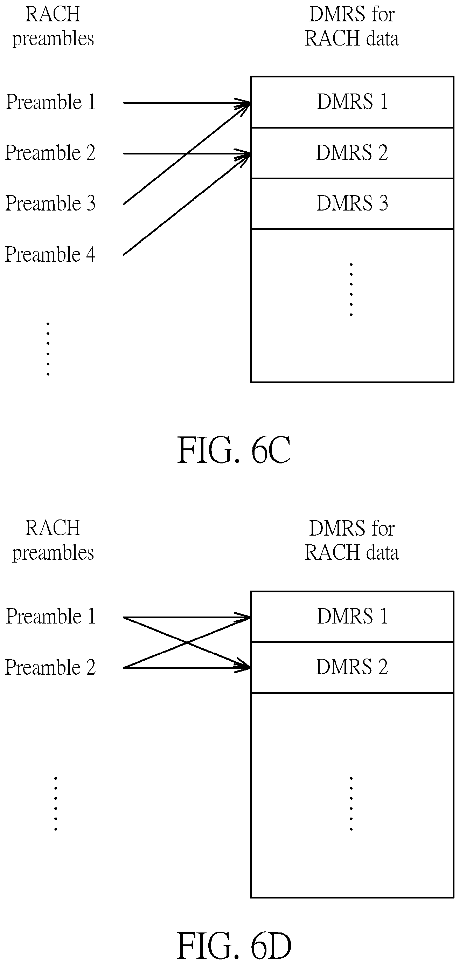

In an embodiment, the preamble is associated with DMRS. Please refer to FIG. 6A-6D, which illustrate association between the preambles and DMRSs. In FIG. 6A, one preamble is mapped to one DMRS. In FIG. 6B, multiple preambles are mapped to one DMRS. In FIG. 6C, one preamble is mapped to multiple DMRSs. In FIG. 6D, one preamble is mapped to multiple DMRSs.

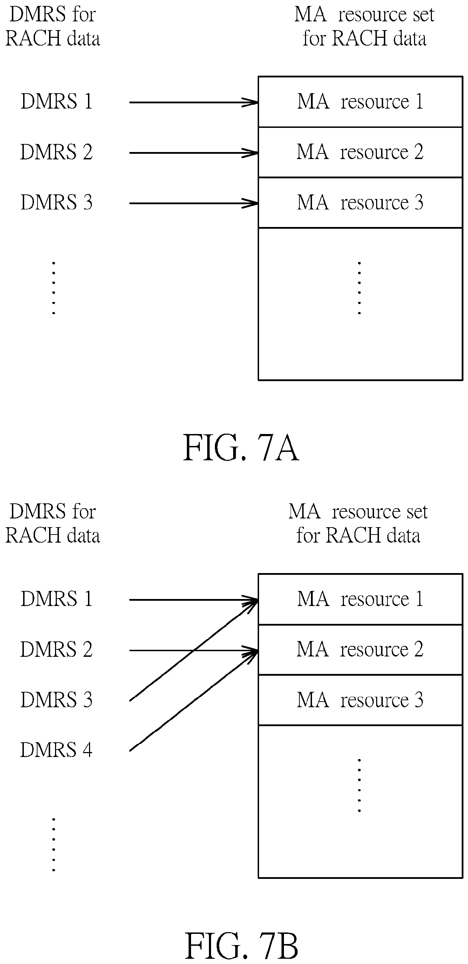

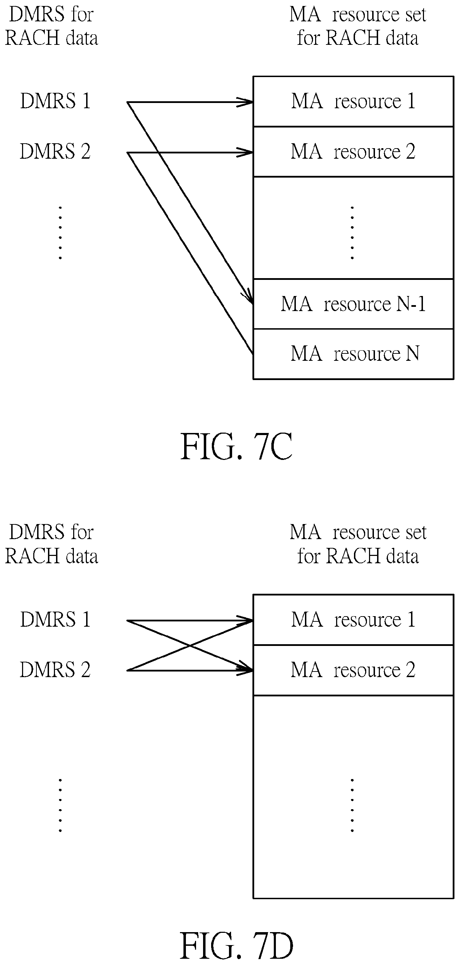

In another embodiments, the DMRS is associated with MA resource. Please refer to FIG. 7A-7D, which illustrate association between the DMRSs and MA resources. In FIG. 7A, one DMRS is mapped to one MA resource of the MA resource set allocated for RACH data transmission. In FIG. 7B, multiple DMRSs are mapped to one MA resource of the MA resource set allocated for RACH data transmission. In FIG. 7C, one DMRS is mapped to multiple MA resources of the MA resource set allocated for RACH data transmission. In FIG. 7D, one DMRS is mapped to multiple MA resources of the MA resource set allocated for RACH data transmission.

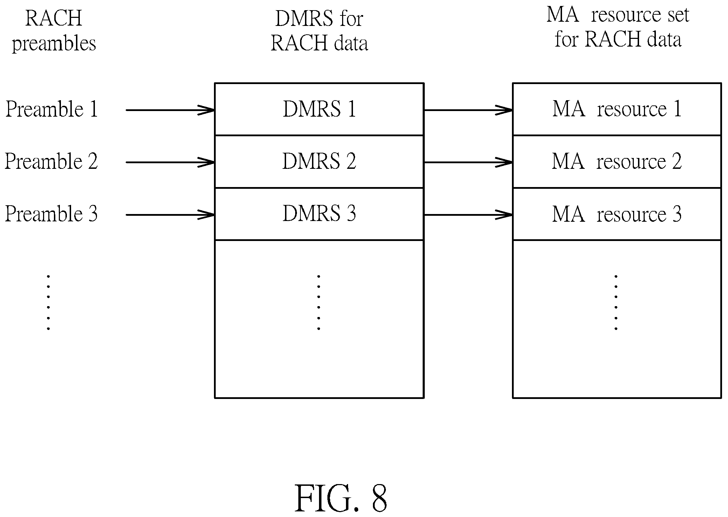

In other embodiments, the preamble is directed associated with DMRSs and indirectly associated with MA resource. Please refer to FIG. 8, which illustrate association among preambles, the DMRSs and MA resources. Note that, the example of one-to-one mapping among preambles, DMRSs and MA resource is not limited herein. Any two of them are associated (i.e. one-to-multiple, multiple-to-one, or multiple-to-multiple) in a way described in the above. The association indicates the mapping information among preambles, DMRSs and MA resources and includes one preamble is mapped to one or multiple MA resources, multiple preambles are mapped to one or multiple MA resources, one preamble is mapped to one or multiple DMRSs, multiple preambles are mapped to one or multiple DMRSs, one DMRS is mapped to one or multiple MA resources, and multiple DMRSs are mapped to one or multiple MA resources.

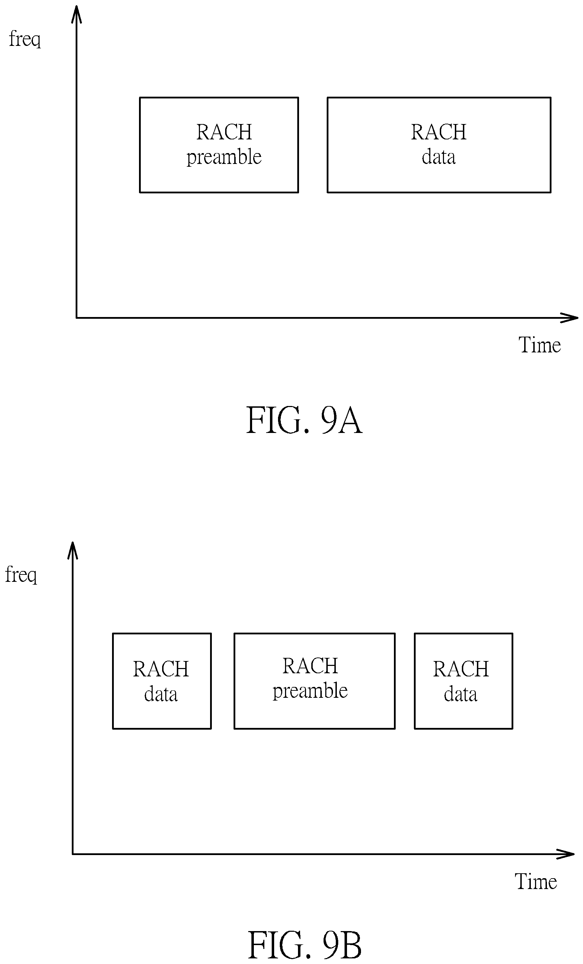

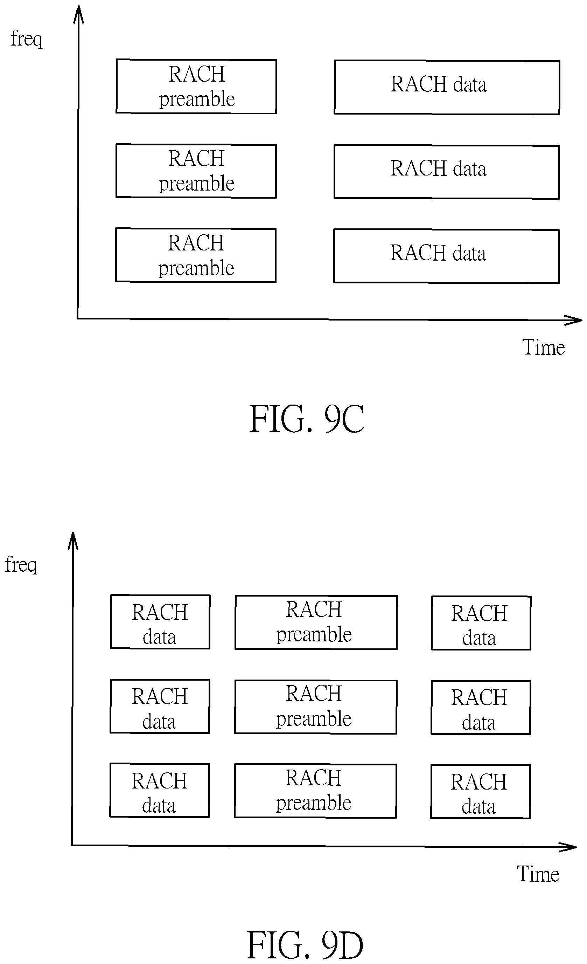

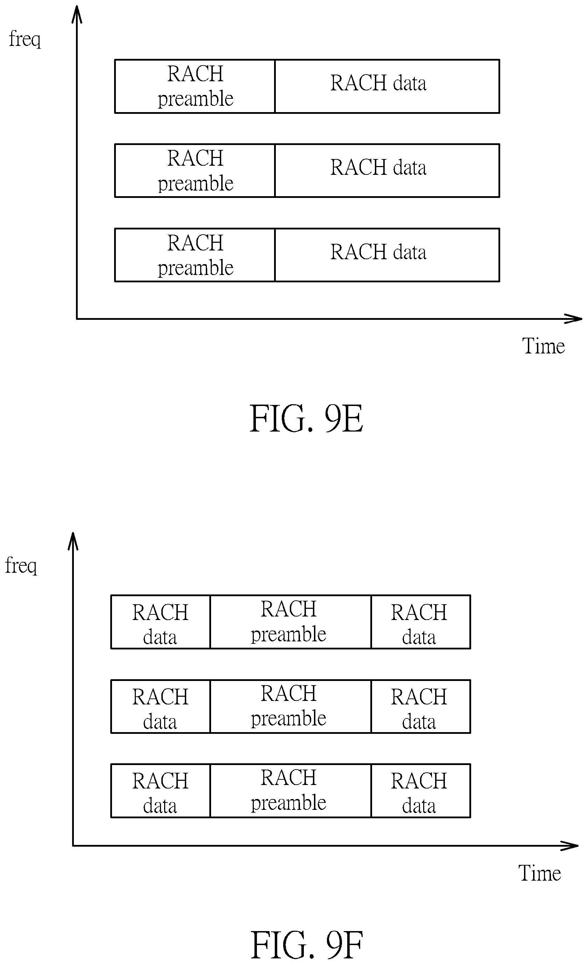

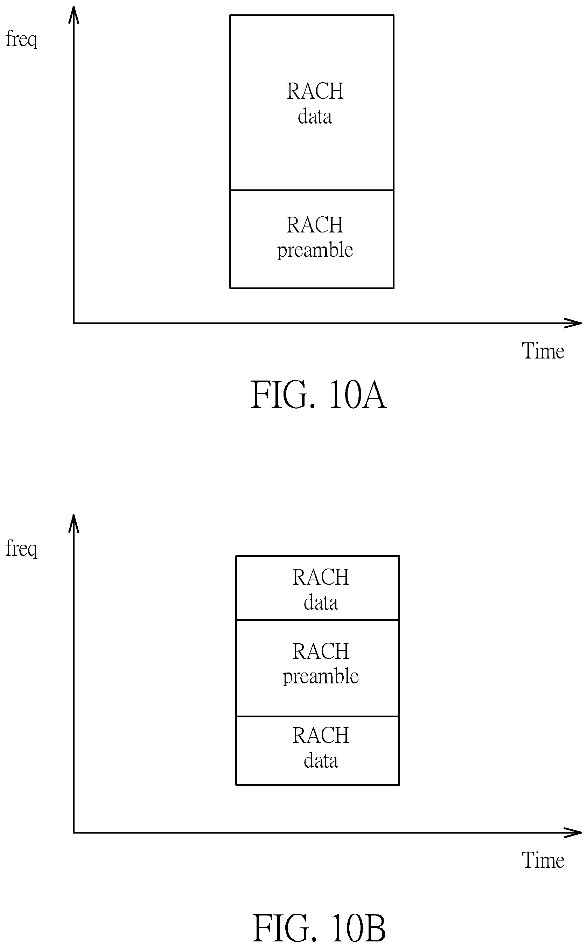

Regarding physical time-frequency resource allocation, the network can allocate the physical resource for RACH data transmission with respect to that for RACH preambles in a time division multiplexing (TDM) manner or in a frequency division multiplexing (FDM) manner. FIGs. 9A-9F and 10A-10H are schematic diagrams of allocation types for preamble and RACH data according to the present disclosure.

With TDM-type resource allocation, the timing advance (TA) estimated by the preamble in the front can be directly applied to the demodulation of the following data. In FIG. 9E-9F, when channel is time-invariant or slow fading, RACH data can be allocated close to preamble. In other words, the DMRS may not be required for RACH data reception if channel variation is small. In this case, the network may use received preamble for channel estimation for RACH data reception. On the other hand, as shown in FIGs. 9A-9D, DMRS are employed for RACH data, so that RACH data is not allocated right next to preambles. As a result, more channel diversity and scheduling flexibility can be gained. In FIGs. 9C-9F, when the UE needs to transmit its selected preamble and its RACH data on non-consecutive distributed resources in the frequency domain, the resource allocation for RACH data can be TDM'ed to that for RACH preamble in a contiguous way, as shown in FIGs. 9E-9F, or non-contiguous way, as shown in FIGs. 9C-9D. One reason for this distributed resource allocation for RACH preamble could be to meet the minimum bandwidth occupancy requirement such in an unlicensed band.

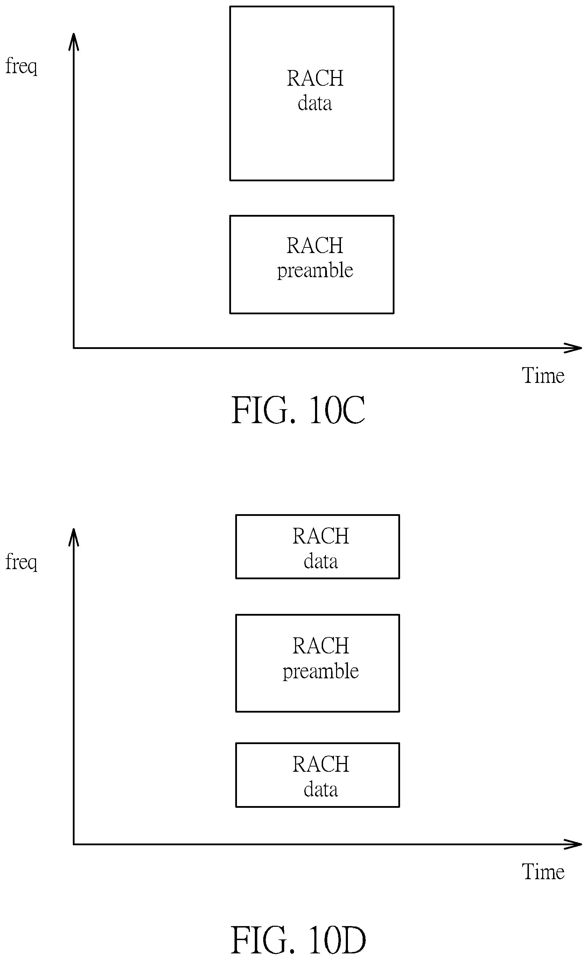

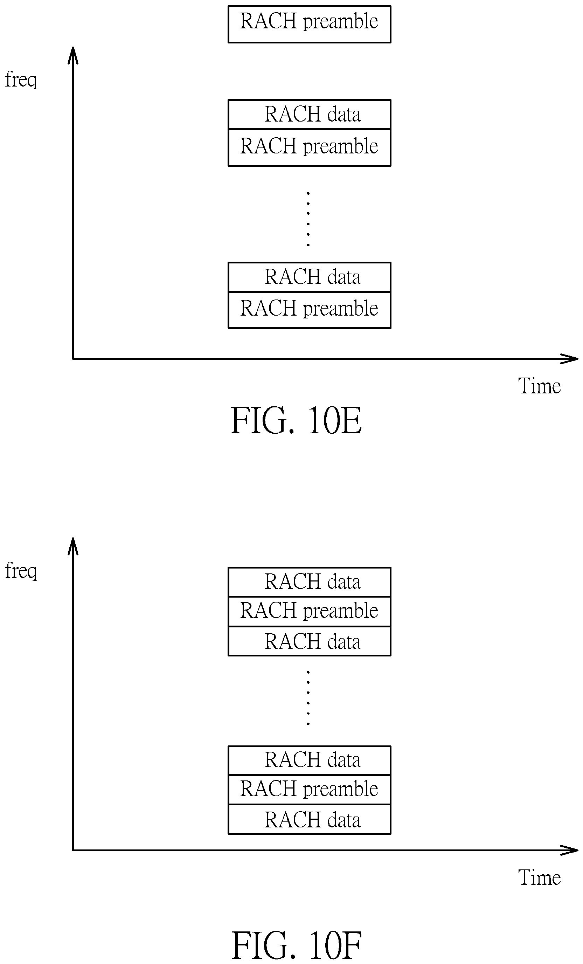

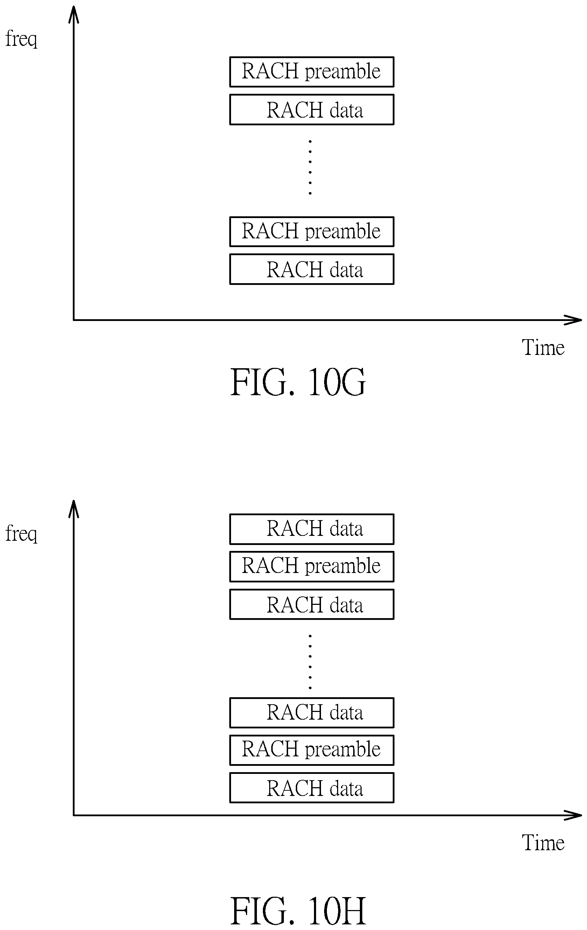

On the other hand, FIGs. 10A-10H are schematic diagrams of frequency division multiplexing (FDM) allocation types for the preamble and RACH data according to the present disclosure. One advantage of the FDM-type resource allocation is that both RACH preamble and RACH data can be transmitted with a shorter time slot compared with that with TDM-type resource allocation. This is especially useful in scenarios such as unlicensed bands where available time slots are limited. In FIGs. 10A, 10B, 10E and 10F, when channel is frequency-flat, RACH data can be allocated close to preamble so that DMRS is not necessary. On the other hand, as shown in FIGs. 10C, 10D, 10G and 10H, the DMRS are employed, and thus the RACH data are not necessarily allocated right next to preambles, so that frequency diversity and scheduling flexibility can be gained. In FIGs. 10E-10H, resources for one RACH preamble can be distributed in a non-consecutive way in the frequency dimension for some reason. One reason for this distributed resource allocation for RACH preamble could be to meet the minimum bandwidth occupancy requirement such in an unlicensed band. Similarly, RACH data can be transmitted on resource right next to the resource of RACH preambles to reduce DMRS overhead when the channel is frequency, as shown in FIGs. 10E and 10F, or not necessarily next to them, as shown in FIGs. 10G and 10H, to gain frequency diversity and scheduling flexibility.

The abovementioned steps of the processes/operations including suggested steps can be realized by means that could be a hardware, a software, or a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 20.

In conclusion, the present invention is addressed at physical channel design for the 2-step RACH procedure, especially to resource allocation (TDM-type/FDM-type resource allocation) for preamble and data transmission in the 2-step RACH procedure. In addition, the present invention provides a mechanism to associate the preamble directly or indirectly with the MA resource and DMRS, so as to decode/demodulate the RACH data in the 2-step RACH procedure. Thus, 2-step RACH procedure with data transmission and reception can be realized in the 5G LTE for reduces signaling overhead and transmission latency.

Those skilled in the art will readily observe that numerous modifications and alterations of the device and method may be made while retaining the teachings of the invention. Accordingly, the above disclosure should be construed as limited only by the metes and bounds of the appended claims.

The present invention may also be defined by means of the following numbered clauses.
1. A method of data transmission in a random access procedure for a user equipment (UE) of a wireless communication system including a network, the method comprising:
   obtaining a resource allocated for data transmission and a resource allocated for preamble transmission with these resources allocated in a frequency division multiplexing (FDM) manner;
   transmitting a preamble and data in the random access procedure to the network according to the obtained resources; and
   monitoring a response corresponding to the transmitted preamble and data from the network.
2. The method of clause 1, wherein the resource allocated for the data transmission is predefined in the UE and/or configured by the network via broadcasted system information and/or UE-specific signaling.
3. The method of clause 1, wherein the resource allocated for data transmission is consecutive or non-consecutive to the resource allocated for preamble transmission.
4. The method of clause 1, wherein the step of transmitting the preamble and data in the random access procedure to the network according to the obtained resources comprises:
   transmitting the preamble and data in the random access procedure to the network according to obtained resources and an association among any combination of preambles, multiple access (MA) resources for data transmission and demodulation reference signals (DMRSs) for uplink channel estimation.
5. The method of clause 4, wherein the MA resource includes time-frequency block, codeword/codebook, sequence, interleaving and/or mapping pattern, demodulation reference signal, preamble, spatial-dimension, power-dimension, and time-frequency resource.
6. The method of clause 4, wherein the association is predefined in the UE and/or configured by the network via broadcasted system information and/or UE-specific signaling.
7. The method of clause 4, wherein the association indicates the mapping information among preambles, DMRSs and MA resources and includes one preamble is mapped to one or multiple MA resources, multiple preambles are mapped to one or multiple MA resources, one preamble is mapped to one or multiple DMRSs, multiple preambles are mapped to one or multiple DMRSs, one DMRS is mapped to one or multiple MA resources, and multiple DMRSs are mapped to one or multiple MA resources.
8. The method of clause 4, wherein the step of transmitting the preamble and data in the random access procedure to the network according to the obtained resources and the association among any combination of preambles, MA resources for data transmission and DMRS for uplink channel estimation comprises:
   selecting a preamble;
   selecting a MA resource; and
   transmitting the selected preamble on the obtained resource for preamble transmission and data with the selected MA resource on the obtained resource for data transmission.
9. The method of clause 8, wherein the step of selecting the preamble includes at least one of:
   by randomly choosing from the available preambles; and
   by configuring to the dedicated preamble configured by the network; or by choosing from the preamble(s) associated with the selected MA resource.
10. The method of clause 8, wherein the step of selecting the MA resource includes at least one of:
   by randomly choosing from the available MA resources; and
   by configuring to the dedicated MA resource configured by the network; or by choosing from the MA resource (s) associated with the selected preamble.
11. The method of clause 4, wherein the step of transmitting the preamble and data in the random access procedure to the network according to obtained resources and the association among any combination of preambles, MA resources for data transmission and DMRS for uplink channel estimation comprises:
   selecting a preamble;
   selecting a DMRS;
   selecting a MA resource; and
   transmitting the selected preamble on the obtained resource for preamble transmission and data with the selected DMRS and MA resource on the obtained resource for data transmission.
12. The method of clause 11, wherein the step of selecting the preamble includes at least one of:
   by randomly choosing from the available preambles; or by configuring to the dedicated preamble configured by the network;
   by choosing from the preamble(s) associated with the selected DMRS;
   by choosing from the preamble (s) associated with the selected MA resource; and
   by choosing from the preamble (s) associated with the selected DMRS and MA resource.
13. The method of clause 11, wherein the step of selecting the DMRS includes at least one of: by randomly choosing from the available DMRSs;
   by configuring to the dedicated DMRS configured by the network; by choosing from the DMRS(s) associated with the selected preamble;
   by choosing from the DMRS(s) associated with the selected MA resource; and
   by choosing from the DMRS (s) associated with the selected preamble and MA resource.
14. The method of clause 11, wherein the step of selecting the MA resource includes at least one of:
   by randomly choosing from the available MA resources; or by configuring to the dedicated MA resource configured by the network;
   by choosing from the MA resource(s) associated with the selected preamble;
   by choosing from the MA resource(s) associated with the selected DMRS; and
   by choosing from the MA resource(s) associated with the selected preamble and DMRS.
15. A method of data transmission in a random access procedure for a user equipment (UE) of a wireless communication system including a network, the method comprising:
   transmitting the preamble and data in the random access procedure to the network according to an association among any combination of preambles, multiple access (MA) resources for data transmission and demodulation reference signals (DMRSs) for uplink channel estimation; and
   monitoring a response corresponding to the transmitted preamble and data from the network.
16. The method of clause 15, wherein the MA resource includes time-frequency block, codeword, sequence, interleaving and/or mapping pattern, spatial-dimension, power-dimension, and time-frequency resource.
17. The method of clause 15, wherein the association is predefined in the UE and/or configured by the network via broadcasted system information and/or UE-specific signaling.
18. The method of clause 15, wherein the association indicates the mapping information among preambles, DMRSs and MA resources and includes one preamble is mapped to one or multiple MA resources, multiple preambles are mapped to one or multiple MA resources, one preamble is mapped to one or multiple DMRSs, multiple preambles are mapped to one or multiple DMRSs, one DMRS is mapped to one or multiple MA resources, and multiple DMRSs are mapped to one or multiple MA resources.
19. The method of clause 15, further comprising:
   obtaining a resource allocated for data transmission and a resource allocated for preamble transmission in a random access procedure with the sources multiplexing to each other in a time division multiplexing (TDM) manner.
20. The method of clause 19, wherein the resource allocated for data transmission is non-contiguous in the time dimension to the resource allocated for preamble transmission.
21. The method of clause 19, wherein the step of transmitting the preamble and data in the random access procedure to the network according to the association among any combination of preambles, MA resources for data transmission and DMRSs for uplink channel estimation comprises:
   selecting the preamble;
   selecting a MA resource; and
   transmitting the selected preamble on the obtained resource for preamble transmission and data with the selected MA resource on the obtained resource for data transmission.
22. The method of clause 21, wherein the step of selecting the preamble includes at least one of:
   by randomly choosing from the available preambles;
   by configuring to the dedicated preamble configured by the network; and
   by choosing from the preamble (s) associated with the selected MA resource.
23. The method of clause 21, wherein the step of selecting the MA resource includes at least one of:
   by randomly choosing from the available MA resources; and
   by configuring to the dedicated MA resource configured by the network; or by choosing from the MA resource (s) associated with the selected preamble.
24. The method of clause 19, wherein the step of transmitting the preamble and data in the random access procedure to the network according to the association among any combination of preambles, MA resources for data transmission and DMRSs for uplink channel estimation comprises:
   selecting the preamble;
   selecting a DMRS;
   selecting a MA resource; and
   transmitting the selected preamble on the obtained resource for preamble transmission and data with the selected DMRS and MA resource on the obtained resource for data transmission.
25. The method of clause 24, wherein the step of selecting the preamble includes at least one of:
   by randomly choosing from the available preambles;
   by configuring to the dedicated preamble configured by the network;
   by choosing from the preamble(s) associated with the selected DMRS;
   by choosing from the preamble (s) associated with the selected MA resource; and
   by choosing from the preamble (s) associated with the selected DMRS and MA resource.
26. The method of clause 24, wherein the step of selecting the DMRS includes at least one of: by randomly choosing from the available DMRSs;
   by configuring to the dedicated DMRS configured by the network;
   by choosing from the DMRS(s) associated with the selected preamble;
   by choosing from the DMRS(s) associated with the selected MA resource; and
   by choosing from the DMRS (s) associated with the selected preamble and MA resource.
27. The method of clause 24, wherein the step of selecting the MA resource includes at least one of:
   by randomly choosing from the available MA resources;
   by configuring to the dedicated MA resource configured by the network;
   by choosing from the MA resource(s) associated with the selected preamble; or by choosing from the MA resource(s) associated with the selected DMRS; and
   by choosing from the MA resource(s) associated with the selected preamble and DMRS.
28. A method of data reception in a random access procedure for a network of a wireless communication system including a user equipment (UE), the method comprising:
   receiving a preamble and data in the random access procedure on resources allocated in a frequency division multiplexing (FDM) manner, from the UE; and
   transmitting a response corresponding to the received preamble and data, to the UE.
29. The method of clause 28, wherein the resource allocated for the data is predefined in the network.
30. The method of clause 28, wherein the resource allocated for data is consecutive or non-consecutive to the resource allocated for the preamble.
31. The method of clause 28, further comprising:
   performing a channel estimation for demodulation of the received data; and
   decoding the received data according to a channel estimation result and an association among any combination of preambles, multiple access (MA) resources for data transmission, and demodulation reference signals (DMRS) for uplink channel estimation.
32. The method of clause 31, wherein the MA resource includes time-frequency block, codeword, sequence, interleaving and/or mapping pattern, spatial-dimension, power-dimension, and time-frequency resource.
33. The method of clause 31, wherein the association is predefined in the network.
34. The method of clause 31, wherein the association indicates the mapping information among preambles, DMRSs and MA resources and includes one preamble is mapped to one or multiple MA resources, multiple preambles are mapped to one or multiple MA resources, one preamble is mapped to one or multiple DMRSs, multiple preambles are mapped to one or multiple DMRSs, one DMRS is mapped to one or multiple MA resources, and multiple DMRSs are mapped to one or multiple MA resources.
35. The method of clause 31, wherein the step of performing the channel estimation for demodulation of the received data comprises:
   performing the channel estimation for demodulation of the received data according to the received preamble; and the step of decoding the received data according to the channel estimation result and the association among any combination of preambles, MA resources for data transmission, and DMRS for uplink channel estimation comprises:
   decoding the received data by a MA resource from the MA resources associated with the received preamble.
36. The method of clause 31, wherein the step of performing the channel estimation for demodulation of the received data comprises:
   performing the channel estimation for demodulation of the received data according to a DMRS from the DMRSs associated to the received preamble; and the step of decoding the received data according to the channel estimation result and the association among any combination of preambles, MA resources for data transmission, and DMRS for uplink channel estimation comprises:
   decoding the received data by a MA resource from the MA resources associated with the received preamble or from the MA resources associated with the DMRS.
37. A method of data reception in a random access procedure for a network of a wireless communication system including a user equipment (UE), the method comprising:
   receiving a preamble and data in the random access procedure, from the UE;
   performing a channel estimation for demodulation of the received data;
   decoding the received data according to a channel estimation result and an association among any combination of preambles, multiple access (MA) resources for data transmission, and demodulation reference signals (DMRSs) for uplink channel estimation; and
   transmitting a response corresponding to the received preamble, to the UE.
38. The method of clause 37, wherein the MA resource includes time-frequency block, codeword, sequence, interleaving and/or mapping pattern, spatial-dimension, power-dimension, and time-frequency resource.
39. The method of clause 37, wherein the association is predefined in the network.
40. The method of clause 37, wherein the association indicates the mapping information among preambles, DMRSs and MA resources and includes one preamble is mapped to one or multiple MA resources, multiple preambles are mapped to one or multiple MA resources, one preamble is mapped to one or multiple DMRSs, multiple preambles are mapped to one or multiple DMRSs, one DMRS is mapped to one or multiple MA resources, and multiple DMRSs are mapped to one or multiple MA resources.
41. The method of clause 37, wherein the step of receiving a preamble and data in the random access procedure, from the UE comprises:
   receiving the preamble and data in the random access procedure on resources allocated in a time division multiplexing (TDM) manner, from the UE.
42. The method of clause 41, wherein the resource allocated for data is non-contiguous in the time dimension to the resource allocated for preamble.
43. The method of clause 37, wherein the step of performing the channel estimation for demodulation of the received data comprises:
   performing the channel estimation for demodulation of the received data according to the received preamble; and the step of decoding the received data according to the channel estimation result and the association among any combination of preambles, MA resources for data transmission, and DMRS for uplink channel estimation comprises:
   decoding the received data by a MA resource from the MA resources associated with the received preamble.
44. The method of clause 37, wherein the step of performing the channel estimation for demodulation of the received data comprises:
   performing the channel estimation for demodulation of the received data according to a DMRS from the DMRSs associated to the received preamble; and the step of decoding the received data according to the channel estimation result and the association among any combination of preambles, MA resources for data transmission, and DMRS for uplink channel estimation comprises:
   decoding the received data by a MA resource from the MA resources associated with the received preamble or from the MA resources associated with the DMRS.

## Claims

1. A method (30) of data transmission in a random access procedure for a user equipment, UE, of a wireless communication system including a network, the method (30) comprising:
obtaining a resource allocated for data transmission and a resource allocated for preamble transmission with these resources allocated in a frequency division multiplexing, FDM, manner;
transmitting (310) a preamble and data in the random access procedure to the network according to the obtained resources; and
monitoring (310) a response corresponding to the transmitted preamble and data from the network.

2. The method of claim 1, wherein the resource allocated for the data transmission is predefined in the UE and/or configured by the network via broadcasted system information and/or UE-specific signaling;
or
wherein the resource allocated for data transmission is consecutive or non-consecutive to the resource allocated for preamble transmission.

3. The method (30) of claim 1, wherein the step of transmitting (310) the preamble and data in the random access procedure to the network according to the obtained resources comprises:
transmitting (310) the preamble and data in the random access procedure to the network according to obtained resources and an association among any combination of preambles, multiple access, MA, resources for data transmission and demodulation reference signals, DMRSs, for uplink channel estimation.

4. The method (30) of claim 3, wherein the MA resource includes time-frequency block, codeword/codebook, sequence, interleaving and/or mapping pattern, demodulation reference signal, preamble, spatial-dimension, power-dimension, and time-frequency resource;
or
wherein the association is predefined in the UE and/or configured by the network via broadcasted system information and/or UE-specific signaling;
or
wherein the association indicates the mapping information among preambles, DMRSs and MA resources and includes one preamble is mapped to one or multiple MA resources, multiple preambles are mapped to one or multiple MA resources, one preamble is mapped to one or multiple DMRSs, multiple preambles are mapped to one or multiple DMRSs, one DMRS is mapped to one or multiple MA resources, and multiple DMRSs are mapped to one or multiple MA resources;
or
wherein the step of transmitting (310) the preamble and data in the random access procedure to the network according to obtained resources and the association among any combination of preambles, MA resources for data transmission and DMRS for uplink channel estimation comprises:
selecting a preamble;
selecting a DMRS;
selecting a MA resource; and
transmitting the selected preamble on the obtained resource for preamble transmission and data with the selected DMRS and MA resource on the obtained resource for data transmission.

5. The method (30) of claim 3, wherein the step of transmitting (310) the preamble and data in the random access procedure to the network according to the obtained resources and the association among any combination of preambles, MA resources for data transmission and DMRS for uplink channel estimation comprises:
selecting a preamble;
selecting a MA resource; and
transmitting the selected preamble on the obtained resource for preamble transmission and data with the selected MA resource on the obtained resource for data transmission;

6. The method (30) of claim 5, wherein the step of selecting the preamble includes at least one of:
by randomly choosing from the available preambles; and
by configuring to the dedicated preamble configured by the network; or by choosing from the preamble(s) associated with the selected MA resource;
or
wherein the step of selecting the MA resource includes at least one of:
by randomly choosing from the available MA resources; and
by configuring to the dedicated MA resource configured by the network; or by choosing from the MA resource (s) associated with the selected preamble.

7. A method (30) of data transmission in a random access procedure for a user equipment, UE, of a wireless communication system including a network, the method (30) comprising:
transmitting (310) the preamble and data in the random access procedure to the network according to an association among any combination of preambles, multiple access, MA, resources for data transmission and demodulation reference signals, DMRSs, for uplink channel estimation; and
monitoring (320) a response corresponding to the transmitted preamble and data from the network.

8. The method (30) of claim 7, wherein the MA resource includes time-frequency block, codeword, sequence, interleaving and/or mapping pattern, spatial-dimension, power-dimension, and time-frequency resource;
or
wherein the association is predefined in the UE and/or configured by the network via broadcasted system information and/or UE-specific signaling.
or
wherein the association indicates the mapping information among preambles, DMRSs and MA resources and includes one preamble is mapped to one or multiple MA resources, multiple preambles are mapped to one or multiple MA resources, one preamble is mapped to one or multiple DMRSs, multiple preambles are mapped to one or multiple DMRSs, one DMRS is mapped to one or multiple MA resources, and multiple DMRSs are mapped to one or multiple MA resources.

9. The method (30) of claim 7, further comprising:
obtaining a resource allocated for data transmission and a resource allocated for preamble transmission in a random access procedure with the sources multiplexing to each other in a time division multiplexing, TDM, manner.

10. The method (30) of claim 9, wherein the resource allocated for data transmission is non-contiguous in the time dimension to the resource allocated for preamble transmission.
or
wherein the step of transmitting the preamble and data in the random access procedure to the network according to the association among any combination of preambles, MA resources for data transmission and DMRSs for uplink channel estimation comprises:
selecting the preamble;
selecting a MA resource; and
transmitting the selected preamble on the obtained resource for preamble transmission and data with the selected MA resource on the obtained resource for data transmission;
or
wherein the step of transmitting (310) the preamble and data in the random access procedure to the network according to the association among any combination of preambles, MA resources for data transmission and DMRSs for uplink channel estimation comprises:
selecting the preamble;
selecting a DMRS;
selecting a MA resource; and
transmitting the selected preamble on the obtained resource for preamble transmission and data with the selected DMRS and MA resource on the obtained resource for data transmission.

11. A method (40) of data reception in a random access procedure for a network of a wireless communication system including a user equipment, UE, the method (40) comprising:
receiving (410) a preamble and data in the random access procedure on resources allocated in a frequency division multiplexing, FDM, manner, from the UE; and
transmitting (440) a response corresponding to the received preamble and data, to the UE.

12. The method (40) of claim 11, further comprising:
performing (420) a channel estimation for demodulation of the received data; and
decoding (430) the received data according to a channel estimation result and an association among any combination of preambles, multiple access, MA, resources for data transmission, and demodulation reference signals, DMRS, for uplink channel estimation.

13. The method (40) of claim 12, wherein the MA resource includes time-frequency block, codeword, sequence, interleaving and/or mapping pattern, spatial-dimension, power-dimension, and time-frequency resource;
or
wherein the association is predefined in the network;
or
wherein the association indicates the mapping information among preambles, DMRSs and MA resources and includes one preamble is mapped to one or multiple MA resources, multiple preambles are mapped to one or multiple MA resources, one preamble is mapped to one or multiple DMRSs, multiple preambles are mapped to one or multiple DMRSs, one DMRS is mapped to one or multiple MA resources, and multiple DMRSs are mapped to one or multiple MA resources;
or
wherein the step of performing the channel estimation for demodulation of the received data comprises:
performing the channel estimation for demodulation of the received data according to the received preamble; and the step of decoding the received data according to the channel estimation result and the association among any combination of preambles, MA resources for data transmission, and DMRS for uplink channel estimation comprises:
decoding the received data by a MA resource from the MA resources associated with the received preamble;
or
wherein the step of performing the channel estimation for demodulation of the received data comprises:
performing the channel estimation for demodulation of the received data according to a DMRS from the DMRSs associated to the received preamble; and the step of decoding the received data according to the channel estimation result and the association among any combination of preambles, MA resources for data transmission, and DMRS for uplink channel estimation comprises:
decoding the received data by a MA resource from the MA resources associated with the received preamble or from the MA resources associated with the DMRS.

14. A method (40) of data reception in a random access procedure for a network of a wireless communication system including a user equipment, UE, the method (40) comprising:
receiving (410) a preamble and data in the random access procedure, from the UE;
performing (420) a channel estimation for demodulation of the received data;
decoding (430) the received data according to a channel estimation result and an association among any combination of preambles, multiple access, MA, resources for data transmission, and demodulation reference signals, DMRSs, for uplink channel estimation; and
transmitting (440) a response corresponding to the received preamble, to the UE.

15. The method (40) of claim 14, wherein the MA resource includes time-frequency block, codeword, sequence, interleaving and/or mapping pattern, spatial-dimension, power-dimension, and time-frequency resource;
or
wherein the association is predefined in the network;
or
wherein the association indicates the mapping information among preambles, DMRSs and MA resources and includes one preamble is mapped to one or multiple MA resources, multiple preambles are mapped to one or multiple MA resources, one preamble is mapped to one or multiple DMRSs, multiple preambles are mapped to one or multiple DMRSs, one DMRS is mapped to one or multiple MA resources, and multiple DMRSs are mapped to one or multiple MA resources;
or
wherein the step of receiving (410) a preamble and data in the random access procedure, from the UE comprises:
receiving the preamble and data in the random access procedure on resources allocated in a time division multiplexing, TDM, manner, from the UE;
or
wherein the step of performing (420) the channel estimation for demodulation of the received data comprises:
performing the channel estimation for demodulation of the received data according to the received preamble; and the step of decoding the received data according to the channel estimation result and the association among any combination of preambles, MA resources for data transmission, and DMRS for uplink channel estimation comprises:
decoding the received data by a MA resource from the MA resources associated with the received preamble;
or
wherein the step of performing the channel estimation for demodulation of the received data comprises:
performing the channel estimation for demodulation of the received data according to a DMRS from the DMRSs associated to the received preamble; and the step of decoding the received data according to the channel estimation result and the association among any combination of preambles, MA resources for data transmission, and DMRS for uplink channel estimation comprises:
decoding the received data by a MA resource from the MA resources associated with the received preamble or from the MA resources associated with the DMRS.
